# EUROPEAN PATENT SPECIFICATION

(11) **EP 4 192 196 B1**
(45) Date of publication and mention of the grant of the patent: **30.07.2025**
(21) Application number: 21212436.6
(22) Date of filing: 06.12.2021
(51) Int. Cl.: H05B 45/36, H02M 1/00

(54) **CONTROL SYSTEM AND METHOD FOR CONTROLLING A CURRENT SOURCE CONFIGURED TO PROVIDE CURRENT TO LIGHTING MEANS, OPERATING DEVICE FOR LIGHTING MEANS, AND LUMINAIRE**
STEUERUNGSSYSTEM UND VERFAHREN ZUR STEUERUNG EINER STROMQUELLE, DIE ZUR BEREITSTELLUNG VON STROM AN LEUCHTMITTEL KONFIGURIERT IST, BEDIENUNGSVORRICHTUNG FÜR LEUCHTMITTEL UND LEUCHTE
SYSTÈME DE COMMANDE ET PROCÉDÉ DE COMMANDE D'UNE SOURCE DE COURANT CONFIGURÉE POUR FOURNIR UN COURANT À DES MOYENS D'ÉCLAIRAGE, DISPOSITIF DE COMMANDE POUR DES MOYENS D'ÉCLAIRAGE ET LUMINAIRE

(43) Date of publication of application: 07.06.2023
(73) Proprietor: Tridonic GmbH & Co. KG, 6851 Dornbirn (AT)
(72) Inventor: Auer, Hans, 6850 Dornbirn (AT); Saccavini, Lukas, 6850 Dornbirn (AT); Stark, Stefan, 6850 Dornbirn (AT)
(74) Representative: Beder, Jens

(56) References cited:
- US-A1- 2014 111 110
- US-A1- 2017 133 936

## Description

The invention relates to a control system for controlling a current source configured to provide current to lighting means; an operating device for lighting means, the operating device comprising such a control system; and a luminaire comprising such an operating device. Further, the invention relates to a method for controlling a current source configured to provide current to lighting means.

For electrically supplying lighting means, such as light emitting diodes (LEDs), a current source may be used that is configured to provide a current to the lighting means. The current provided by the current source may be controlled by controlling the current source, i.e. the operation of the current source. Such a current source may be referred to as controllable current source. Light emitted by the lighting means, i.e. a light emission of the lighting means, may be controlled by controlling the current and, thus, electrical energy provided to the lighting means. The greater the current, for example an average current over time, the greater the amount of light (e.g. light intensity) that is emitted by the lighting means and vice versa.

For controlling the current source, and, thus, the current provided by the current source a feedback control of the current may be performed with regard to a reference current (i.e. a reference quantity or reference value for the current). The reference current indicates the desired current to be provided by the current source to the lighting means in order to achieve a desired light emission by the lighting means. Due to electromagnetic interference (EMI) the current provided to the lighting means may sporadically vary causing sudden flickering in the light emission of the lighting means that is visible to a person. This sudden flickering in the light emission of the lighting means is not wanted. For example, the EMI may be generated by operation of the current source (e.g. switching of a converter).

In order to prevent such a sudden flickering caused by EMI, i.e. in order to mitigate the EMI, an output of the feedback control that is provided to a generator for generating a control signal for controlling the current source may be periodically changed with a frequency. As a result, the light emission is periodically changed around the desired light emission that is set by the reference current of the feedback control. Since this change of the light emission of the lighting means is periodical, it is less distractive for a person compared to a sudden flickering caused by EMI, as described above. The periodical change of the light emission may prevent the unwanted flickering caused by EMI. The term "variation" may be used as a synonym for the term "change".

Preferably, the frequency of periodically changing the output of the feedback control is greater than a frequency that is visible to a person. That is, the frequency is above the visible light flicker spectrum. In other words, the frequency is set so that the output of the feedback control, which is periodically changed with the frequency, results in a control signal that causes a periodically changing current and, thus, a periodically changing light emission of the lighting means with the frequency, wherein the change of the light emission is not visible to a person.

The document US 2017/133 936 A1 describes a system and circuit for achieving bidirectional hysteretic current mode control of a converter comprising a summer that provides a constant hysteresis and has added switching noise immunity, a comparator, a lossless inductor current sense means and a converter, wherein the circuit uses the inductors internal resistance for sensing the current through the inductor.

The document US 2014/111110 A1 describes a technique to eliminate perceptible flickering by LEDs being dimmed by PWM pulses, wherein a controllable oscillator controls switching frequency of a converter for supplying a regulated current or regulated voltage, and the converter controls a first switch at a switching frequency. A varying second signal level is generated by a spread spectrum control (SSC) circuit for controlling the oscillator to vary the switching frequency during operation. The PWM dimming circuit generates a string of PWM pulses that control a switch in series with the LEDs. The SSC circuit is synchronized with the PWM pulses to generate the same second signal level at a start of each PWM pulse, such that the switching frequency of the converter is forced to be substantially the same at the start of each PWM pulse while the pulse widths are constant. The repeating driving current waveform eliminates perceptible flicker by the LEDs.

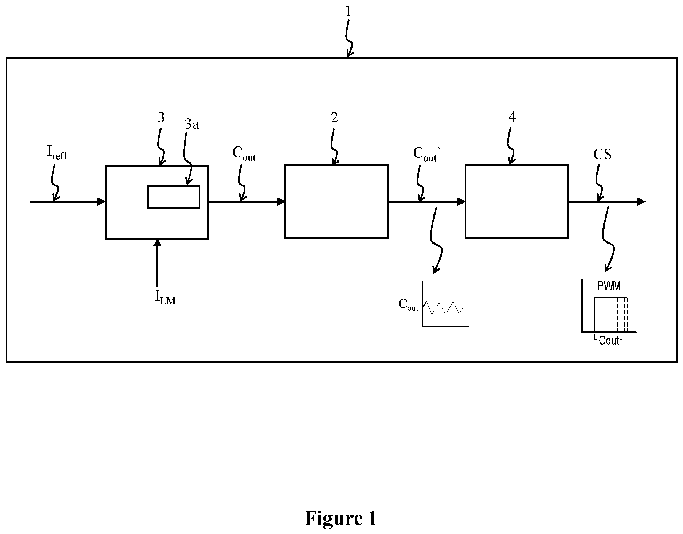

**Figure 1** shows a block diagram of an example of a control system. The control system 1 of Figure 1 is configured to perform the above described control method for EMI mitigation. As shown in Figure 1, a reference current I_{ref1} for the current I_{LM} providable by the current source to the lighting means and a measurement of the current I_{LM} is provided for the feedback control 3 of the current I_{LM} using a controller 3a, such as an PI controller. An output Cₒᵤₜ of the controller 3a and, thus, of the feedback control 3 is provided to a modulator 2. The output Cₒᵤₜ may be referred to as output signal. The modulator 2 is configured to generate, based on the output Cₒᵤₜ of the feedback control 3, a periodically changing signal Cₒᵤₜ', wherein an amplitude of the signal Cₒᵤₜ' periodically changes with a frequency around an amplitude of the output Cₒᵤₜ of the feedback control 3. Thus, the modulator 2 is configured to modulate the output Cₒᵤₜ of the feedback control 3 with the frequency. As mentioned above, the frequency is preferably above a frequency of light emission that is visible to a person, i.e. the human eye.

Next, the periodically changing signal Cₒᵤₜ' is provided to a control signal generator 4 for generating a control signal CS, e.g. a pulse-width modulated (PWM) signal, for controlling the current source. The control signal generator 4 is configured to generate, based on the periodically changing signal Cₒᵤₜ', the control signal CS. In case the control signal CS is a PWM signal, the duty cycle (i.e. ratio between on-time to period of signal) periodically changes with the frequency with which the output Cₒᵤₜ of the feedback control 3 periodically changes. Thus, the light emitted by the lighting means, electrically supplied with the current from the current source being controlled by the control signal CS, periodically changes with the aforementioned frequency. Due to the modulation with the frequency, EMI mitigation is achieved so that instead of sudden flickering in the light emission, the light emission is periodically changed on purpose. Preferably, this change of the light emission is with a frequency above the visible light spectrum.

A drawback of the control method described with regard to Figure 1 is that the frequency used for modulation needs to be above the corner frequency of the control system 1 used for controlling the current source in order to avoid that the feedback control 3 (i.e. closed-loop control) regulates against the modulation performed by the modulator 2. In particular, the frequency used for modulation needs to be above the corner frequency of the control system by one order of magnitude. The corner frequency of the control system is to be understood as a border frequency up to which the feedback control by the control system is able to react to changes of the current I_{LM} for the lighting means that is fed back to the control system 1. That the frequency used for modulation needs to be above the corner frequency may be a problem because a decent EMI mitigation sometimes requires a lower modulation frequency, i.e. a frequency below the corner frequency. This cannot be achieved by the control method described with regard to Figure 1.

Therefore, it is an object of the invention to provide a control system for controlling a current source configured to provide current to lighting means without the above described drawback. It is in particular an object of the invention to provide a control system for controlling a current source configured to provide current to lighting means, which allows EMI mitigation without the above described drawback.

These and other objects, which become apparent upon reading the following description, are solved by a control system for controlling a current source in accordance with claim 1, and by a method for controlling a current source in accordance with claim 13. The dependent claims refer to preferred embodiments of the invention.

According to a first aspect of the invention, a control system for controlling a current source configured to provide a current to lighting means is provided. Optionally, the lighting means are at least one light emitting diode (LED). The control system is configured to obtain a first reference current for the current, and generate, based on the first reference current, a second reference current, wherein an amplitude of the second reference current periodically changes, with a frequency, around an amplitude of the first reference current. Further, the control system is configured to perform a feedback control of the current with regard to the second reference current.

In other words, the first aspect proposes to provide a control system in which not an output of the feedback control of the current is modulated with a frequency, as it is the case in the control method of Figure 1, but instead the reference current (i.e. first reference current) for the feedback control is modulated with a frequency. Namely, the first aspect proposes to generate, based on the first reference current, a second reference current, wherein an amplitude of the second reference current periodically changes with a frequency around an amplitude of the first reference current; and to perform based on the second reference current, having the periodically changing amplitude, the feedback control of the current.

Since the reference current (i.e. the second reference current) has an amplitude periodically changing around the amplitude of the desired reference current (i.e. the first reference current) to which the current for the lighting means is to be set by the feedback control, the output of the feedback control periodically changes with the frequency. Thus a control signal, that may be generated based on that output, will periodically change with the frequency causing the current (i.e. the amplitude of the current) to periodically change with the frequency and, thus, the light emission of the lighting means to periodically change with the frequency. As a result, the control system according to the first aspect achieves EMI mitigation for the reasons described above with regard to Figure 1. Further, the control system of the first aspect allows a more stable light emission of the lighting means.

Moreover, since the modulation with the frequency is performed already before the feedback control, namely by generating the second reference current, and, thus, it is not performed after the feedback control, the frequency of the modulation does not need to be above the corner frequency of the control system. As a result, the control system of the first aspect does not comprise the drawback with regard to the corner frequency, as exemplarily described above with regard to Figure 1. Therefore, the control system of the first aspect achieves at least the above-mentioned object of the invention.

The current may be a DC current. The first reference current may be a first reference DC current.

In other words, the control system may be configured to generate the second reference current by amplitude modulating the first reference current with a waveform having an amplitude periodically changing with the frequency. That is, the second reference current may equal to the first reference current that is amplitude modulated with a waveform having an amplitude periodically changing with the frequency. The frequency may be referred to as modulation frequency.

The first reference current is a first reference value for the current. The second reference current is a second reference value for the current, wherein the second reference value periodically changes, with the frequency, around the first reference value.

The term "closed-loop control" may be used as a synonym for the term "feedback control". Controlling the current source may be understood as controlling the current provided by the current source.

The control system may be configured to generate, based on the first reference current, the second reference current such that the amplitude of the second reference current periodically changes, with the frequency, according to a triangular waveform.

In other words, the control system may be configured to generate, based on the first reference current, the second reference current such that the second reference current has the shape of a triangular waveform. Thus, the control system may be configured to generate the second reference current by amplitude modulating the first reference current with a triangular waveform periodically changing with the frequency. That is, the second reference current equals to the first reference current that may be amplitude modulated with a triangular waveform periodically changing with the frequency. The triangular waveform is only optional and, thus, another waveform type may be used, such as a sinus waveform, a sawtooth waveform etc.

Optionally, the frequency is smaller than a corner frequency of the control system for controlling the current source. This improves EMI mitigation.

The frequency may be greater than a frequency visible to a person, i.e. the human eye. That is, the frequency may be greater than the visible light flicker spectrum. In other words, the frequency may be set so that a change of light with the frequency is not visible to a person, i.e. the human eye.

As mentioned already above, the corner frequency of the controller is to be understood as a border frequency up to which the feedback control by the control system is able to react to changes of the current for the lighting means that is feed back to the control system.

The control system is configured to generate, based on the feedback control, a control signal for controlling the current source.

The control system is configured to compute an error between a measurement of the current and the second reference current, input the error into a controller, and generate, based on the output of the controller, the control signal for controlling the current source. Optionally, the controller is or comprises a PI controller. Additionally or alternatively, the controller may be or may comprise any other controller type known in the art.

Optionally, the control signal is a pulse-width modulated signal (PWM signal).

Optionally, the control system comprises a microcontroller and a control integrated circuit (control IC). The microcontroller may be configured to provide the first reference current to the control IC. The control IC may be configured to generate, based on the first reference current, the second reference current, and perform the feedback control of the current with regard to the second reference current. Optionally, the control IC is configured to generate, based on the feedback control, the control signal for controlling the current source. Since the control IC may work faster than the microcontroller, the control system may work fast.

Optionally, the control system comprises a microcontroller and a control integrated circuit (control IC). The microcontroller may be configured to generate, based on the first reference current, the second reference current, and provide the second reference current to the control IC. The control IC may be configured to perform the feedback control of the current with regard to the second reference current. Optionally, the control IC is configured to generate, based on the feedback control, the control signal for controlling the current source. The more functions the control IC performs the more expensive the control IC is. Thus, this may reduce costs and effort.

For example, the control IC may be an application specific integrated circuit (ASIC) or a field-programmable gate array (FPGA).

According to a second aspect of the invention, an operating device for lighting means is provided. Optionally, the lighting means are at least one light emitting diode (LED). The operating device comprises a current source configured to provide a current to the lighting means and a control system according to the first aspect, as described above. The control system is configured to control the current source.

In case the operating device is for LEDs, the term "LED-driver" may be used as a synonym for the term "operating device". The operating device may be a ballast for lighting means, such as at least one LED.

The current source may be an actively switched DC/DC converter with at least one switch, and the control system is configured to control switching of the at least one switch. Optionally, the control system is configured to control switching of the at least one switch by providing a control signal to the switch.

Examples of an actively switched DC/DC converter comprise a buck-converter, boost-converter, buck-boost-converter, flyback converter, resonance converter etc.

The term "actively clocked DC/DC converter" may be used as a synonym for the term "actively switched DC/DC converter". The at least one switch may be or may comprise one or more transistors. Examples of transistors comprise field-effect transistors (FETs), e.g. metal-oxide semiconductor FETs (MOSFETs); bipolar junction transistors (BJTs); insulated gate bipolar transistors (IGBTs) etc.

Optionally, the operating device comprises a measurement unit for measuring the current providable by the current source. The measurement unit may comprise or may be a shunt resistor. The control system may be configured to obtain the current measured by the measurement unit. The measurement of the current provides an actual value of the current for the feedback control of the current with regard to the second reference current.

Optionally, the operating device comprises a communication interface for communication to outside the operating device. The control system may be configured to obtain via the communication interface the first reference current.

The communication interface may be configured to communicate wirelessly and/or wire bound.

The communication interface may be a bus interface configured for being electrically connected to a bus. The bus may be a wired bus. The bus may be a DALI-bus or DALI-2 bus, i.e. a bus according to the DALI ("*Digital Addressable Lighting Interface*") standard or DALI-2 standard. They are well known standards in the field of lighting, wherein DALI-2 is the follow up standard of DALI. The bus may any other known bus type, such as a Distributed Systems Interface (DSI) bus. Thus, the communication interface may be a DALI interface, a DALI-2 interface, a DSI interface etc.

The communication interface may be configured to be electrically connected to a memory or data storage, e.g. a secure digital memory card (SD card), universal serial bus (USB) flash drive (e.g. USB stick) etc. Thus, the communication interface may be a SD interface, USB interface etc.

The above description with regard to the control system according to the first aspect of the invention is also valid for the operating device according to the second aspect of the invention.

The operating device according to the second aspect of the invention achieves the same advantages as the control system according to the first aspect of the invention.

According to a third aspect of the invention a luminaire is provided. The luminaire comprises an operating device according to the second aspect, as described above, and lighting means. Optionally the lighting means are at least one light emitting diode (LED). The operating device is configured to operate the lighting means.

The lighting means may comprise or be one or more lighting elements. The lighting means are not limited to being at least one LED (i.e. one or more LEDs) and, thus, may additionally or alternatively be at least one other lighting means type.

The above description with regard to the operating device according to the second aspect of the invention is also valid for the luminaire according to the third aspect of the invention.

The luminaire according to the third aspect of the invention achieves the same advantages as the control system according to the first aspect of the invention.

According to a fourth aspect of the invention a method for controlling a current source configured to provide a current to lighting means is provided. Optionally the lighting means are at least one light emitting diode (LED). The method comprises obtaining a first reference current for the current and generating, based on the first reference current, a second reference current, wherein an amplitude of the second reference current periodically changes, with a frequency, around an amplitude of the first reference current. The method further comprises performing a feedback control of the current with regard to the second reference current.

The method may comprise generating, based on the first reference current, the second reference current such that the amplitude of the second reference current periodically changes, with the frequency, according to a triangular waveform.

Optionally, the frequency is smaller than a corner frequency of a control system for controlling the current source.

The method comprises generating, based on the feedback control, a control signal for controlling the current source.

The method comprises computing an error between a measurement of the current and the second reference current, inputting the error into a controller, and generating, based on the output of the controller, the control signal for controlling the current source. Optionally, the controller is a PI controller.

Optionally, the control signal is a pulse-width modulated signal (PWM signal).

Optionally, the method may comprise providing, by a microcontroller, the first reference current to a control integrated circuit (control IC). The method may further comprise generating, by the control IC, the second reference current based on the first reference current, and performing, by the control IC, the feedback control of the current with regard to the second reference current. Optionally, the method comprises generating, by the control IC, based on the feedback control the control signal for controlling the current source.

Optionally, the method may comprise generating, by a microcontroller, the second reference current based on the first reference current, and providing the second reference current to a control IC. The method may further comprise performing, by the control IC, the feedback control of the current with regard to the second reference current. Optionally, the method comprises generating, by the control IC, based on the feedback control the control signal for controlling the current source.

For example, the control IC may be an application specific integrated circuit (ASIC) or a field-programmable gate array (FPGA).

The above description with regard to the control system according to the first aspect of the invention is also valid for the method according to the fourth aspect of the invention.

The method according to the fourth aspect of the invention achieves the same advantages as the control system according to the first aspect of the invention.

It has to be noted that all devices, elements, units and means described in the present application could be implemented in software or hardware elements or any kind of combination thereof. All steps which are performed by the various entities described in the present application as well as the functionalities described to be performed by the various entities are intended to mean that the respective entity is adapted to or configured to perform the respective steps and functionalities.

In the following, the invention is described exemplarily with reference to the enclosed Figures, in which
- **Figure 1**: shows a block diagram of an example of a control system;
- **Figure 2**: shows a block diagram of a control system according to an embodiment of the invention;
- **Figure 3**: shows block diagrams of a control system according to two embodiments of the invention; and
- **Figure 4**: shows a block diagram of a luminaire according to an embodiment of the invention.

In the Figures, corresponding elements have the same reference signs.

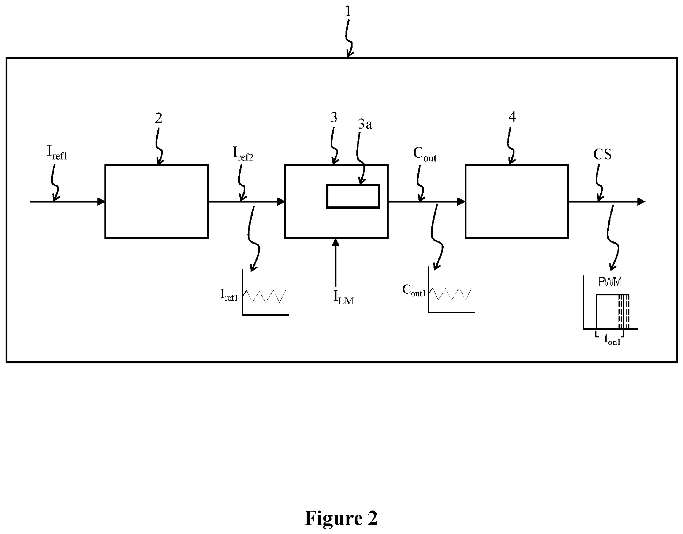

**Figure 2** shows a block diagram of a control system according to an embodiment of the invention. In particular, Figure 2 shows an example of the control system according to the first aspect of the invention, as described above.

The control system 1 of Figure 2 is a control system for controlling a current source that is configured to provide a current I_{LM} to lighting means such as one or more LEDs. As shown in Figure 1, the control system 1 is configured to obtain a first reference current I_{ref1} for the current I_{LM}. The control system 1 is further configured to generate, based on the first reference current I_{ref1}, a second reference current I_{ref2}, wherein the amplitude of the second reference current I_{ref2} periodically changes, with a frequency, around the amplitude of the first reference current I_{ref1}. For this, the control system may comprise a modulator 2, to which the first reference current I_{ref1} is provided. The modulator 2 may be implemented by software and/or hardware.

The control system 1, in particular the modulator 2, may be configured to generate the second reference current I_{ref2} by amplitude modulating the first reference current I_{ref1} with a waveform having an amplitude periodically changing with the frequency.

As exemplarily shown in Figure 2, the waveform may be optionally a triangular waveform. That is, the control system 1, in particular the modulator 2, may be configured to generate, based on the first reference current I_{ref1}, the second reference current (I_{ref2}) such that the amplitude of the second reference current I_{ref2} periodically changes, with the frequency, around the amplitude of the first reference current I_{ref1} according to a triangular waveform. This is indicated in Figure 2. The waveform for modulating the first reference current I_{ref1} is not limited to a triangular waveform and may be any other periodically changing waveform, such as a sinus waveform. The first reference current I_{ref1} is the reference current indicating the desired current to be supplied by the current source to the lighting means in order to achieve a desired light emission by the lighting means. The second reference current I_{ref2} is generated to prevent suddenly occurring flickering of light emission caused by EMI and, thus, for EMI mitigation purposes.

The control system 1 is configured to perform a feedback control 3 of the current I_{LM} with regard to the second reference current I_{ref2}. For this, the control system 1 may comprise a feedback control function block 3. The feedback control function block 3 may be implemented by software and/or hardware. The control system 1, in particular the feedback control function block 3, may obtain the second reference current I_{ref2} and a measurement of the current I_{LM} that is providable by the current source to the lighting means. In other words, the control system 1 may perform a feedback control of the current I_{LM} using the second reference current I_{ref2} and the measurement of the current I_{LM}.

The control system 1, in particular the feedback control function block 3, may be configured to compute an error between the measurement of the current I_{LM} and the second reference current I_{ref2}. For this, the measurement of the current I_{LM} and the second reference current I_{ref2} may be compared with each other. The control system 1, in particular the feedback control function block 3, may be configured to input the error into a controller 3a. The controller 3a may be a PI controller or any other controller type known in the art. Since the second reference current I_{ref2} has an amplitude that periodically changes with the frequency (used for generating, based on the first reference current I_{ref1}, the second reference current I_{ref2}) around the amplitude of the first reference current I_{ref1}, the output Cₒᵤₜ of the feedback control function block 3, in particular of the controller 3a, periodically changes around an output Cₒᵤₜ₁. The output Cₒᵤₜ₁ would be generated by the feedback control function block 3, in particular by the controller 3a, based on the first reference current I_{ref1}, in case the first reference current I_{ref1} is used as a reference quantity of the feedback control 3.

The output Cₒₙₜ may be referred to as signal Cₒᵤₜ (output signal) that is output by the feedback control function block 3, in particular by the controller 3a. Thus, the signal Cₒᵤₜ comprises an amplitude that periodically changes, with the frequency (used for generating, based on the first reference current I_{ref1}, the second reference current I_{ref2}), around the amplitude of the signal Cₒᵤₜ₁. The signal Cₒᵤₜ₁ would be output by the feedback control function block 3, in case the first reference current I_{ref1} is used as a reference quantity of the feedback control 3. Since according to the embodiment of Figure 2, the first reference current I_{ref1} is amplitude modulated using a triangular waveform and, thus, the amplitude of the second reference current I_{ref2} periodically changes around the amplitude of the first reference current I_{ref1} according to the triangular waveform, the output Cₒᵤₜ of the feedback control function block 3 has a triangular waveform. That is, the amplitude of the signal Cₒᵤₜ output by the feedback control function block 3, in particular by the controller 3a, may periodically change (around the amplitude Cₒᵤₜ₁) according to the triangular waveform.

Further, the control system 1 may be configured to generate, based on the output Cₒᵤₜ of the feedback control function block 3, in particular of the controller 3a, a control signal CS for controlling the current source and, thus, the current providable by the current source to the lighting means. For this the control system 1 may comprise a control signal generator 4 configured to generate based on the signal Cₒᵤₜ the control signal CS. The control signal generator 4 may be implemented by software or hardware. For example, the control signal CS may be a PWM signal.

In case the current source is an actively switched DC/DC converter with at least one switch, wherein the at least one switch is controlled by the control signal CS generated by the generator 4, the signal Cₒᵤₜ provided by the feedback control function block 3 may determine the switching characteristic of the generator 4. For controlling the current providable by the actively switched DC/DC converter a peak control or an on-time control of the at least one switch may be performed by providing the control signal CS to the at least one switch. For example, a peak control may comprise switching, optionally turning-off, the at least one switch when the current I_{LM} reaches a peak value. For example, an on-time control may comprise switching, optionally turning-off, the at least one switch when a time indicating the on-time has elapsed.

The signal Cₒᵤₜ provided by the feedback control function block 3 has an amplitude that periodically changes with the frequency (used for generating, based on the first reference current I_{ref1}, the second reference current I_{ref2}) around the amplitude of the signal Cₒᵤₜ₁ that would have been computed by the feedback control 3 based on the first reference current I_{ref1}. Therefore, the duty cycle of the PWM signal will periodically change with the frequency around a duty cycle that would be generated by the control signal generator 4 for a signal Cₒᵤₜ₁ computed by the feedback control 3 based on the first reference current I_{ref1}. The duty cycle D is the ratio between the on-time tₒₙ of the PWM signal and the period T of the PWM signal, wherein the period T corresponds to the sum of the on-time tₒₙ and the off-time t_{off} of the PWM signal (D = tₒₙ/T = tₒₙ/(tₒₙ + t_{off})). In Figure 2 this periodical change or variation of the duty cycle of the PWM signal, generated based on the signal Cₒᵤₜ (output by the feedback control function block 3 for the second reference current I_{ref2}), is indicated by showing a periodically change of the on-time tₒₙ of the PWM signal around the on-time tₒₙ₁. The on-time tₒₙ₁ is the on-time of a PWM signal that would be generated based on the signal Cₒᵤₜ₁ that would be computed by the feedback control 3 when the first reference current I_{ref1} is used as the reference quantity of the feedback control 3.

Because of the periodically changing control signal CS, e.g. PWM signal, the current I_{LM} provided by the current source controlled by the control signal CS periodically changes and, thus, the light emission of the lighting means periodically changes. Preferably, the frequency used for generating, based on the first reference current I_{ref1}, the second reference current I_{ref2} is not visible for a person, i.e. it is above the visible light flicker spectrum, so that the periodical change or variation of the light emission of the lighting means, which is caused by the modulation of the first reference current I_{ref1} with said frequency, is not visible to a person, i.e. the human eye.

Optionally, the current source controllable by the control system 1 may be an actively switched DC/DC converter with at least one switch. In this case, the control system 1 is configured to control switching of the at least one switch. The control system 1 may be configured to control switching of the at least one switch by providing the control signal CS to the switch.

As exemplarily shown in Figure 2, the modulation with the frequency of the feedback control of the current I_{LM} by the control system 1 is performed in advanced to the feedback control function block 3. Namely, the reference current is amplitude modulated before being provided to the feedback control function block 3. In particular, the first reference current I_{ref1}, which corresponds to the reference current of the example of Figure 1, is not directly provided or input to the feedback control, but used to generate the second reference current I_{ref2} that is used for the feedback control of the current I_{LM}. The second reference current I_{ref2} has an amplitude periodically changing around the amplitude of the first reference current I_{ref1}.

Therefore, according to the embodiment of Figure 2, not the output signal of the feedback control 3 is modulated (as it is the case in the control system of Figure 1), but an input of the feedback control 3, namely the reference current for the feedback control 3, is modulated. Thus, according to Figure 2, not a constant current value is provided as reference quantity for the feedback control 3 of the current I_{LM}. Instead a reference current (the second reference current I_{ref2}), which is generated by amplitude modulating an initial desired reference current for the feedback control (the first reference current I_{ref1}), is used as reference quantity for the feedback control 3. Thus, after the feedback control 3 no modulation takes places in contrast to the control system of Figure 1, in which the output of the feedback control is modulated.

As a result, the frequency used for modulation, i.e. with which the amplitude of the second reference current I_{ref2} is periodically changed around the amplitude of the first reference current I_{ref1}, does not need to be greater than the corner frequency of the control system 1. In contrast, preferably the frequency may be smaller than the corner frequency of the control system 1. This makes it possible, that the function of the modulator 2 is implemented or performed by a microcontroller, which works slower compared to a control IC, such as an application specific integrated circuit (ASIC). Alternatively, the function of the modulator 2 may be implemented or performed by a control IC, such an ASIC or an field-programmable gate-array (FPGA).

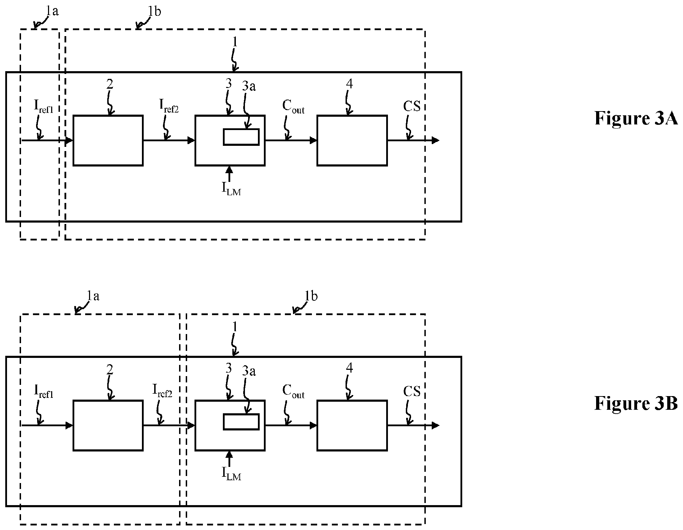

The control system 1 may comprise a microcontroller and a control integrated circuit (control IC). The control IC may be an ASIC or FPGA. The microcontroller and the control IC may be configured to perform the functions of the control system 1 described above with regard to Figure 2. Figures 3a and 3b show two embodiments how the different functions of the control system may be distributed among the microcontroller and the control IC.

The functions of the control system 1 described above may be implemented by software and/or hardware. Thus, the modulator 2, the feedback control function block 3 and the control signal generator 4 may be implemented by software and/or hardware.

For further details of the control system of Figure 2 reference is made to the above description of the control system according to the first aspect.

**Figure 3** shows block diagrams of a control system according to two embodiments of the invention. The control systems 1 shown in Figure 3 each correspond to the control system 1 of Figure 2 and, thus, the above description with regard to Figure 2 is valid for the control systems 1 of Figure 3. Figure 3 shows how the different functions of the control system 1 may be differently distributed among the elements of the control system 1.

As mentioned already above, the control system 1 may comprise a microcontroller 1a and a control IC 1b.

According to an embodiment of the invention shown in Figure 3A, the microcontroller 1a may be configured to obtain the first reference current I_{ref1}. Further, the control IC 1b may be configured to implement or perform the functions of the modulator 2, the feedback control function block 3 and the control signal generator 4 described above with regard to Figure 2.

Thus, the microcontroller 1a may be configured to provide the first reference current I_{ref1} to the control IC 1b. The control IC 1b may be configured to generate, based on the first reference current I_{ref1}, the second reference current I_{ref2} and perform the feedback control of the current I_{LM} with regard to the second reference current I_{ref2}. Further, the control IC 1b may be configured to generate, based on the feedback control, the control signal CS for controlling the current source.

According to an embodiment of the invention shown in Figure 3B, the microcontroller 1b may be configured to obtain the first reference current I_{ref1} and to implement or perform the function of the modulator 2 described above with regard to Figure 2. Further, the control IC 1b may be configured to implement or perform the functions of the feedback control function block 3 and the control signal generator 4 described above with regard to Figure 2.

Thus, the microcontroller 1a may be configured to generate, based on the first reference current I_{ref1}, the second reference current I_{ref2}, and provide the second reference current I_{ref2} to the control IC 1b. The control IC 1b may be configured to perform the feedback control of the current I_{LM} with regard to the second reference current I_{ref2}. Further, the control IC 1b may be configured to generate, based on the feedback control, the control signal CS for controlling the current source.

For further details of the control systems of Figure 3 reference is made to the above description of the control system according to the first aspect and the control system 1 of Figure 2.

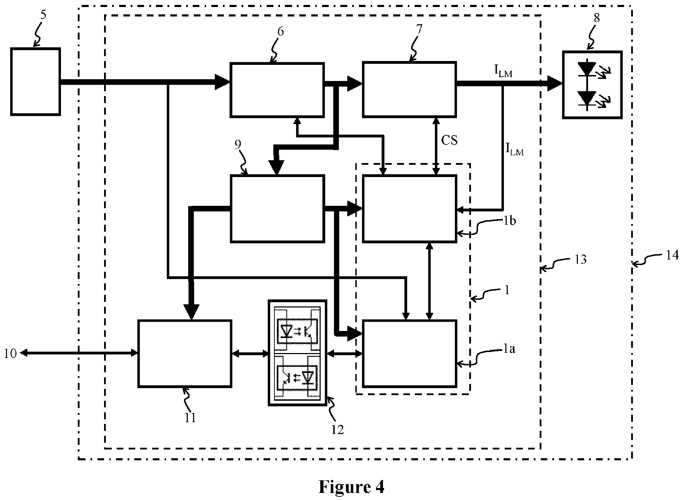

**Figure 4** shows a block diagram of a luminaire according to an embodiment of the invention. The luminaire is an example of a luminaire according to the third aspect. Thus, the description with regard to the luminaire according to the third aspect is correspondingly valid for the luminaire of Figure 4.

As shown in Figure 4, the luminaire 14 comprises an operating device 13 and lighting means 8, wherein the operating device is configured to operate the lighting means 8. The lighting means 8 may be one or more LEDs (i.e. at least one LED), as exemplarily shown in Figure 4. The lighting means 8 may be alternatively or additionally any other lighting means type. The operating device 13 is an example of the operating device according to the second aspect. Thus, the description with regard to the operating device according to the second aspect is correspondingly valid for the operating device 13.

As shown in Figure 4, the operating device 13 comprises a current source 7 configured to provide a current I_{LM} to the lighting means 8, and a control system 1, wherein the control system 1 is configured to control the current source 7 and, thus, control the current I_{LM} providable by the current source 7. The control system 1 is an example of the control system of the first aspect. Thus, the above description with regard to the control system according to the first aspect and the control system of Figures 1, 3A and 3B is correspondingly valid for the control system 1. The control system 1 may comprise a microcontroller 1a and a control IC 1b. The control IC may be an ASIC or an FPGA. The microcontroller 1a and the control IC 1b may be configured to perform the functions of the control system 1. In particular, the microcontroller 1a and the control IC 1b may be configured to perform the functions of the control system 1 as outlined above with regard to Figure 3A or as outlined above with regard to Figure 3B.

The control system 1, in particular the control IC 1b, may be configured to control the current source 7 by providing a control signal CS to the current source 7. Optionally, the current source 7 may be an actively switched DC/DC converter with at least one switch, and the control system 1 is configured to control switching of the at least one switch. Optionally, the control system 1, in particular the control IC 1b, may be configured to control switching of the at least one switch by providing the control signal CS to the switch.

Examples of an actively switched DC/DC converter comprise a buck-converter, boost-converter, buck-boost-converter, flyback converter, resonance converter etc.

The term "actively clocked DC/DC converter" may be used as a synonym for the term "actively switched DC/DC converter". The at least one switch may be or may comprise one or more transistors. Examples of transistors comprise field-effect transistors (FETs), e.g. metal-oxide semiconductor FETs (MOSFETs); bipolar junction transistors (BJTs); insulated gate bipolar transistors (IGBTs) etc.

The operating device 13 may comprise a measurement unit for measuring the current I_{LM} providable by the current source 7 (not shown in Figure 4). The measurement unit may comprise or may be a shunt resistor. The control system 1, in particular the control IC, may be configured to obtain the measurement of the current I_{LM} and use it for a feedback control of the current I_{LM}, as exemplarily outlined above with regard to Figure 2.

Optionally, the operating device 13 may comprise a power factor control (PFC) and/or filter circuit 6. This PFC and/or filter circuit 6 may comprise an actively switched DC/DC converter for performing the PFC function, filter means (e.g. EMI filter) and/or rectifier means. The PFC and/or filter circuit 6 may be implemented in any way known in the art. Optionally, there may be additional converter stages before the current source 7 (not shown), so that the optional PFC and/or filter circuit 6, the optional one or more additional converter stages, and the current source 7 form an electrical energy supply circuit for providing electrical energy from an external electrical energy source 5, e.g. mains, to the lighting means 8. Thus, the current source 7 may be electrically supplied, e.g. provided with a DC voltage, from the optional PFC and/or filter circuit 6 or a converter stage of the optional one or more additional converter stages. The optional one or more additional converter stages may be electrically supplied from the external electrical energy source 5 (in case the optional PFC and/or filter circuit 6 is not present) or from the optional PFC and/or filter circuit 6. The optional PFC and/or filter circuit 6 may be electrically supplied from the external electrical energy source 5.

The optional PFC and/or filter circuit 6 may be controlled by the control system 1, in particular the control IC 1b, as indicated in Figure 4. The optional one or more converter stages may be controlled by the control system 1, in particular the control IC 1b.

The operating device 13 may comprise a communication interface 11 for communication to outside the operating device 13. The control system 1, in particular the microcontroller 1a, may be configured to obtain via the communication interface 11 the first reference current I_{ref1}. Optionally, the control system 1, in particular the microcontroller 1a, may be configured to obtain via the communication interface 11 information regarding the first reference current I_{ref1} and generate or compute based on said information the first reference current I_{ref1}.

The communication interface 11 may be configured to communicate wirelessly and/or wire bound. The communication interface 11 may be a bus interface configured for being electrically connected to a bus 10. The bus 10 may be a wired bus. The bus 10 may be a DALI-bus or DALI-2 bus, i.e. a bus according to the DALI *("Digital Addressable Lighting Interface")* standard or DALI-2 standard. The bus 10 may be any other known bus type, such as a Distributed Systems Interface (DSI) bus. Thus, the communication interface 11 may be a DALI interface, a DALI-2 interface, a DSI interface etc. The bus 10 may be part of the luminaire 14. The communication interface 11 may be configured to be electrically connected to a memory or data storage, e.g. a secure digital memory card (SD card), universal serial bus (USB) flash drive (e.g. USB stick) etc. Thus, the communication interface 11 may be a SD interface, USB interface etc.

As shown in Figure 4, the control system 1, in particular the microcontroller 1a, may optionally be electrically connected to the communication interface 11 via an galvanic isolation circuit 12. For example, the isolation circuit 12 may comprise one or more optocouplers, one or more transformers etc. The control system 1, in particular the microcontroller 1b, may be configured to communicate via the communication interface 11 with outside the operating device 13, i.e. with an external unit outside the operating device. Outside the operating device 13 may optionally mean outside the luminaire 14. The control system 1, in particular the microcontroller 1b, may be configured to store the first reference current I_{ref1}. A user may provide, for example via the communication interface 11, the first reference current I_{ref1} to the control system 1, in particular to the microcontroller 1a.

Optionally, the operating device 13 may comprise a low voltage power supply 9 for electrically supplying the control system 1, in particular the microcontroller 1a and the control IC 1b, and the communication interface 11. The low voltage power supply 9 may be electrically supplied from the external electrical energy source 5. For example, as exemplarily shown in Figure 4, the low voltage power supply 9 may be electrically supplied, e.g. with a voltage, from the optional PFC and/or filter circuit 6.

For describing the function of the control system 1 and, thus, the control of the current source 7 reference is made to the above description with regard to the control system according to the first aspect and the description with regard to Figures 2, 3A and 3B.

For further details of the luminaire of Figure 4 reference is made to the above description of the luminaire according to the third aspect. For further details of the operating device 13 of Figure 4 reference is made to the above description of the operating device according to the second aspect.

In the claims as well as in the description the word "comprising" does not exclude other elements or steps and the indefinite article "a" or "an" does not exclude a plurality. A single element or other unit may fulfill the functions of several entities or items recited in the claims.

## Claims

1. A control system (1) for controlling a current source (7) configured to provide a current (I_{LM}) to lighting means (8); wherein the control system (1) is configured to
- obtain a first reference current (I_{ref1}) for the current (I_{LM}),
- generate, based on the first reference current (I_{ref1}), a second reference current (I_{ref2}), wherein an amplitude of the second reference current (I_{ref2}) periodically changes, with a frequency, around an amplitude of the first reference current (I_{ref1}), and
- perform, via a feedback control function block (3) of the control system (22), a feedback control of the current (I_{LM}) with regard to the second reference current (I_{ref2}), wherein
- the control system (1) is configured to generate, based on the feedback control, a control signal (CS) for controlling the current source (7),
**characterized in that**
- the control system (1) is configured to
- compute an error between a measurement of the current (I_{LM}) and the second reference current (I_{ref2}),
- input the error into a controller (3a) of the feedback control function block (3), and
- generate, based on an output (Cₒᵤₜ) of the controller (3a), the control signal (CS) for controlling the current source (7).

2. The control system (1) according to claim 1, wherein
- the control system (1) is configured to generate, based on the first reference current (I_{ref1}), the second reference current (I_{ref2}) such that the amplitude of the second reference current (I_{ref2}) periodically changes, with the frequency, according to a triangular waveform.

3. The control system (1) according to claim 1 or 2, wherein
- the frequency is smaller than a corner frequency of the control system (1) for controlling the current source (7).

4. The control system (1) according to any one of the previous claims, wherein
- the control signal (CS) is a pulse-width modulated signal, PWM signal.

5. The control system (1) according to any one of the previous claims, wherein
- the control system (1) comprises a microcontroller (1a) and a control integrated circuit (1b), control IC;
- the microcontroller (1a) is configured to provide the first reference current (I_{ref1}) to the control IC (1b); and
- the control IC (1b) comprises the feedback control function block (3), wherein the control IC (1b) is configured to
- generate, based on the first reference current (I_{ref1}), the second reference current (I_{ref2}),
- perform, via the feedback control function block (3), the feedback control of the current (I_{LM}) with regard to the second reference current (I_{ref2}), and
- optionally generate, based on the feedback control, the control signal (CS) for controlling the current source (7).

6. The control system (1) according to any one of claims 1 to 4, wherein
- the control system (1) comprises a microcontroller (1a) and a control integrated circuit (1b), control IC;
- the microcontroller (1a) is configured to
- generate, based on the first reference current (I_{ref1}), the second reference current (I_{ref2}), and
- provide the second reference current (I_{ref2}) to the control IC (1b); and
- the control IC (1b) comprises the feedback control function block (3), wherein the control IC (1b) is configured to
- perform, via the feedback control function block (3), the feedback control of the current (I_{LM}) with regard to the second reference current (I_{ref2}), and
- optionally generate, based on the feedback control, the control signal (CS) for controlling the current source.

7. The control system (1) according to claim 5 or 6, wherein
- the control IC (1b) is an application specific integrated circuit, ASIC, or a field-programmable gate array, FPGA.

8. An operating device (13) for lighting means (8), optional at least one light emitting diode, LED; wherein the operating device (13) comprises
- a current source (7) configured to provide a current (I_{LM}) to the lighting means (8), and
- a control system (1) according to any one of the previous claims; wherein
- the control system (1) is configured to control the current source (7).

9. The operating device (13) according to claim 8, wherein
- the current source (7) is an actively switched DC/DC converter with at least one switch, and
- the control system (1) is configured to control switching of the at least one switch, optionally by providing the control signal (CS) to the switch.

10. The operating device (13) according to claim 8 or 9, wherein
- the operating device (13) comprises a measurement unit, optional a shunt resistor, for measuring the current (I_{LM}) providable by the current source (7); and
- the control system (1) is configured to obtain the current (I_{LM}) measured by the measurement unit.

11. The operating device (13) according to any one of claims 8 to 10, wherein
- the operating device (13) comprises a communication interface (11) for communication to outside (10) the operating device (13),
- the control system (1) is configured to obtain via the communication interface (10) the first reference current (I_{ref1}).

12. A luminaire (14) comprising,
- an operating device (13) according to any one of claims 8 to 11, and
- lighting means (8), optional at least one light emitting diode, LED; wherein
- the operating device (13) is configured to operate the lighting means (13).

13. A method for controlling a current source (7) configured to provide a current (I_{LM}) to lighting means (8), wherein the method comprises
- obtaining a first reference current (I_{ref1}) for the current (I_{LM}),
- generating, based on the first reference current (I_{ref1}), second reference current (I_{ref2}), wherein an amplitude of the second reference current (I_{ref2}) periodically changes, with a frequency, around an amplitude of the first reference current (I_{ref1}),
- performing a feedback control of the current (I_{LM}) with regard to the second reference current (I_{ref2}), and
- generating, based on the feedback control, a control signal (CS) for controlling the current source (7).
**characterized in that** the method comprises
- computing an error between a measurement of the current (I_{LM}) and the second reference current (I_{ref2}),
- inputting the error into a controller (3a), and
- generating, based on an output (Cₒᵤₜ) of the controller (3a), the control signal (CS) for controlling the current source (7).

## Patentansprüche

1. Steuersystem (1) zum Steuern einer Stromquelle (7), die konfiguriert ist, um einen Strom (I_{LM}) zu Beleuchtungsmitteln (8) bereitzustellen; wobei das Steuersystem (1) konfiguriert ist zum
- Erhalten eines ersten Referenzstrom (I_{ref1}) für den Strom (I_{LM}),
- Erzeugen, basierend auf dem ersten Referenzstrom (I_{ref1}), eines zweiten Referenzstroms (I_{ref2}), wobei sich eine Amplitude des zweiten Referenzstroms (I_{ref2}) mit einer Frequenz um eine Amplitude des ersten Referenzstroms (I_{ref1}) periodisch ändert, und
- Durchführen, über einen Rückkopplungs-Steuerfunktionsblock (3) des Steuersystems (22), einer Rückkopplungssteuerung des Stroms (I_{LM}) in Bezug auf den zweiten Referenzstrom (I_{ref2}), wobei
- das Steuersystem (1) ist konfiguriert ist, um basierend auf der Rückkopplungssteuerung ein Steuersignal (CS) zum Steuern der Stromquelle (7) zu generieren,
**dadurch gekennzeichnet, dass**
- das Steuersystem (1) konfiguriert ist zum
- Berechnen eines Fehlers zwischen einer Messung des Stroms (I_{LM}) und dem zweiten Referenzstrom (I_{ref2}),
- Eingeben des Fehlers in eine Steuerung (3a) des Rückkopplungs-Steuerfunktionsblocks (3) und
- Generieren, basierend auf einer Ausgabe (Cₒᵤₜ) der Steuerung (3a), des Steuersignals (CS) zum Steuern der Stromquelle (7).

2. Steuersystem (1) nach Anspruch 1, wobei
- das Steuersystem (1) konfiguriert ist, um, basierend auf dem ersten Referenzstrom (I_{ref1}), den zweiten Referenzstrom (I_{ref2}) derart zu generieren, dass sich die Amplitude des zweiten Referenzstroms (I_{ref2}) mit der Frequenz gemäß einer Dreieckwellenform periodisch ändert.

3. Steuersystem (1) nach Anspruch 1 oder 2, wobei
- die Frequenz kleiner als eine Eckfrequenz des Steuersystems (1) zum Steuern der Stromquelle (7) ist.

4. Steuersystem (1) nach einem der vorstehenden Ansprüche, wobei
- das Steuersignal (CS) ein pulsweitenmoduliertes Signal, PWM-Signal, ist.

5. Steuersystem (1) nach einem der vorstehenden Ansprüche, wobei
- das Steuersystem (1) eine Mikrosteuerung (1a) und eine integrierte Schaltung der Steuerung (1b), Steuerungs-IC, umfasst;
- die Mikrosteuerung (1a) konfiguriert ist, um den ersten Referenzstrom (I _{ref1}) an die Steuerungs-IC (1b) bereitzustellen; und
- die Steuerungs-IC (1b) den Rückkopplungs-Steuerfunktionsblock (3) umfasst, wobei die Steuerungs-IC (1b) konfiguriert ist zum
- Generieren, basierend auf dem ersten Referenzstrom (I_{ref1}), des zweiten Referenzstroms (I_{ref2}),
- Durchführen, über den Rückkopplungs-Steuerfunktionsblock (3), der Rückkopplungssteuerung des Stroms (I_{LM}) in Bezug auf den zweiten Referenzstrom (I_{ref2}), und
- optional Generieren, basierend auf der Rückkopplungssteuerung, des Steuersignals (CS) zum Steuern der Stromquelle (7).

6. Steuersystem (1) nach einem der Ansprüche 1 bis 4, wobei
- das Steuersystem (1) eine Mikrosteuerung (1a) und eine integrierte Schaltung der Steuerung (1b), Steuerungs-IC, umfasst;
- die Mikrosteuerung (1a) konfiguriert ist zum
- Generieren, basierend auf dem ersten Referenzstrom (I_{ref1}), des zweiten Referenzstroms (I_{ref2}), und
- Bereitstellen des zweiten Referenzstroms (I_{ref2}) an die Steuerungs-IC (1b); und
- die Steuerungs-IC (1b) den Rückkopplungs-Steuerfunktionsblock (3) umfasst, wobei die Steuerungs-IC (1b) konfiguriert ist zum
- Durchführen, über den Rückkopplungs-Steuerfunktionsblock (3), der Rückkopplungssteuerung des Stroms (I_{LM}) in Bezug auf den zweiten Referenzstrom (I_{ref2}), und
- optional Generieren, basierend auf der Rückkopplungssteuerung, des Steuersignals (CS) zum Steuern der Stromquelle.

7. Steuersystem (1) nach Anspruch 5 oder 6, wobei
- die Steuerungs-IC (1b) eine anwendungsspezifische integrierte Schaltung, ASIC, oder ein feldprogrammierbares Gate-Array, FPGA, ist.

8. Betriebsvorrichtung (13) für Beleuchtungsmittel (8), optional mindestens eine Leuchtdiode, LED; wobei die Betriebsvorrichtung (13) umfasst
- eine Stromquelle (7), die konfiguriert ist, um einen Strom (I_{LM}) an die Beleuchtungsmittel (8) bereitzustellen und
- ein Steuersystem (1) nach einem der vorstehenden Ansprüche; wobei
- das Steuersystem (1) konfiguriert ist, um die Stromquelle (7) zu steuern.

9. Betriebsvorrichtung (13) nach Anspruch 8, wobei
- wobei die Stromquelle (7) ein aktiv geschalteter DC/DC-Wandler mit mindestens einem Schalter ist, und
- das Steuersystem (1) konfiguriert ist, um das Schalten des mindestens einen Schalters zu steuern, optional durch Bereitstellen des Steuersignals (CS) an den Schalter.

10. Betriebsvorrichtung (13) nach Anspruch 8 oder 9, wobei
- die Betriebsvorrichtung (13) eine Messeinheit, optional einen Shunt-Widerstand, zum Messen des Stroms (I_{LM}), der durch die Stromquelle (7) bereitstellbar ist, umfasst; und
- das Steuersystem (1) konfiguriert ist, um den Strom (I_{LM}), der durch die Messeinheit gemessen wird, zu erhalten.

11. Betriebsvorrichtung (13) nach einem der Ansprüche 8 bis 10, wobei
- die Betriebsvorrichtung (13) eine Kommunikationsschnittstelle (11) zum Kommunizieren nach außerhalb (10) der Betriebsvorrichtung (13) umfasst,
- das Steuersystem (1) konfiguriert ist, um über die Kommunikationsschnittstelle (10) den ersten Referenzstrom (I_{ref1}) zu erhalten.

12. Leuchte (14), umfassend
- eine Betriebsvorrichtung (13) nach einem der Ansprüche 8 bis 11 und
- Beleuchtungsmittel (8), optional mindestens eine Leuchtdiode, LED; wobei
- die Betriebsvorrichtung (13) konfiguriert ist, um das Beleuchtungsmittel (13) zu betreiben.

13. Verfahren zum Steuern einer Stromquelle (7), die konfiguriert ist, um einen Strom (I_{LM}) an Beleuchtungsmittel (8) bereitzustellen, wobei das Verfahren umfasst
- Erhalten eines ersten Referenzstroms (I_{ref1}) für den Strom (I_{LM}),
- Erzeugen, basierend auf dem ersten Referenzstrom (I_{ref1}), eines zweiten Referenzstroms (I_{ref2}), wobei sich eine Amplitude des zweiten Referenzstroms (I_{ref2}) mit einer Frequenz um eine Amplitude des ersten Referenzstroms (I_{ref1}) periodisch ändert,
- Durchführen einer Rückkopplungssteuerung des Stroms (I_{LM}) in Bezug auf den zweiten Referenzstrom (I_{ref2}),
und
- Generieren, basierend auf der Rückkopplungssteuerung, eines Steuersignals (CS) zum Steuern der Stromquelle (7),
**dadurch gekennzeichnet, dass** das Verfahren umfasst
- Berechnen eines Fehlers zwischen einer Messung des Stroms (I_{LM}) und dem zweiten Referenzstrom (I_{ref2}),
- Eingeben des Fehlers in eine Steuerung (3a), und
- Generieren, basierend auf einer Ausgabe (Cₒᵤₜ) der Steuerung (3a), des Steuersignals (CS) zum Steuern der Stromquelle (7).

## Revendications

1. Système de commande (1) destiné à commander une source de courant (7) configurée pour fournir un courant (I_{LM}) à des moyens d'éclairage (8) ; dans lequel le système de commande (1) est configuré pour
- obtenir un premier courant de référence (I_{ref1}) pour le courant (I_{LM}),
- générer, sur la base du premier courant de référence (I_{ref1}), un second courant de référence (I_{ref2}), dans lequel l'amplitude du second courant de référence (I_{ref2}) varie périodiquement, avec une fréquence, autour de l'amplitude du premier courant de référence (I_{ref1}), et
- exécuter, par l'intermédiaire d'un bloc fonctionnel de commande de rétroaction (3) du système de commande (22), une commande de rétroaction du courant (I_{LM})par rapport au second courant de référence (I_{ref2}), dans lequel
- le système de commande (1) est configuré pour générer, sur la base de la commande de rétroaction, un signal de commande (CS) pour commander la source de courant (7),
**caractérisé en ce que**
- le système de commande (1) est configuré pour
- calculer une erreur entre une mesure du courant (I_{LM}) et le second courant de référence (I_{ref2}),
- introduire l'erreur dans un dispositif de commande (3a) du bloc fonctionnel de commande de rétroaction (3), et
- générer, sur la base d'une sortie (Cₒᵤₜ) du dispositif de commande (3a), le signal de commande (CS) pour commander la source de courant (7).

2. Système de commande (1) selon la revendication 1, dans lequel
- le système de commande (1) est configuré pour générer, sur la base du premier courant de référence (I_{ref1}), le second courant de référence (I_{ref2}) de telle sorte que l'amplitude du second courant de référence (I_{ref2}) varie périodiquement, avec la fréquence, selon une forme d'onde triangulaire.

3. Système de commande (1) selon la revendication 1 ou 2, dans lequel
- la fréquence est inférieure à une fréquence de coin du système de commande (1) pour la commande de la source de courant (7).

4. Système de commande (1) selon l'une quelconque des revendications précédentes, dans lequel
- le signal de commande (CS) est un signal modulé en largeur d'impulsion (PWM).

5. Système de commande (1) selon l'une quelconque des revendications précédentes, dans lequel
- le système de commande (1) comprend un microcontrôleur (1a) et un circuit intégré de commande (1b), CI de commande ;
- le microcontrôleur (1a) est configuré pour fournir le premier courant de référence (I_{ref1}) au CI de commande (1b) ; et
- le CI de commande (1b) comprend le bloc fonctionnel de commande de rétroaction (3), dans lequel le CI de commande (1b) est configuré pour
- générer, sur la base du premier courant de référence (I_{ref1}), le second courant de référence (I_{ref2}),
- exécuter, par l'intermédiaire du bloc fonctionnel de commande de rétroaction (3), la commande de rétroaction du courant (I_{LM}) par rapport au second courant de référence (I_{ref2}), et
- générer éventuellement, sur la base de la commande de rétroaction, le signal de commande (CS) pour commander la source de courant (7).

6. Système de commande (1) selon l'une quelconque des revendications 1 à 4, dans lequel
- le système de commande (1) comprend un microcontrôleur (1a) et un circuit intégré de commande (1b), CI de commande ;
- le microcontrôleur (1a) est configuré pour
- générer, sur la base du premier courant de référence (I_{ref1}), le second courant de référence (I_{ref2}), et
- fournir le second courant de référence (I_{ref2}) au CI de commande (1b) ; et
- le CI de commande (1b) comprend le bloc fonctionnel de commande de rétroaction (3), dans lequel le CI de commande (1b) est configuré pour
- exécuter, par l'intermédiaire du bloc fonctionnel de commande de rétroaction (3), la commande de rétroaction du courant (I_{LM}) par rapport au second courant de référence (I_{ref2}), et
- générer éventuellement, sur la base de la commande de rétroaction, le signal de commande (CS) pour commander la source de courant.

7. Système de commande (1) selon la revendication 5 ou 6, dans lequel
- le CI de commande (1b) est un circuit intégré à application spécifique (ASIC) ou un réseau de portes programmables (FPGA).

8. Dispositif de commande (13) d'un moyen d'éclairage (8), éventuellement au moins une diode électroluminescente, DEL ; dans lequel le dispositif de commande (13) comprend
- une source de courant (7) configurée pour fournir un courant (I_{LM}) au moyen d'éclairage (8), et
- un système de commande (1) selon l'une quelconque des revendications précédentes ; dans lequel
- le système de commande (1) est configuré pour commander la source de courant (7).

9. Dispositif de commande (13) selon la revendication 8, dans lequel
- la source de courant (7) est un convertisseur CC/CC à commutation active avec au moins un commutateur, et
- le système de commande (1) est configuré pour commander la commutation de l'au moins un commutateur, éventuellement en envoyant le signal de commande (CS) au commutateur.

10. Dispositif de commande (13) selon la revendication 8 ou 9, dans lequel
- le dispositif de commande (13) comprend une unité de mesure, éventuellement une résistance shunt, pour mesurer le courant (I_{LM}) pouvant être fourni par la source de courant (7) ; et
- le système de commande (1) est configuré pour obtenir le courant (I_{LM}) mesuré par l'unité de mesure.

11. Dispositif de commande (13) selon l'une quelconque des revendications 8 à 10, dans lequel
- le dispositif de commande (13) comprend une interface de communication (11) pour communiquer avec l'extérieur (10) du dispositif de commande (13),
- le système de commande (1) est configuré pour obtenir, par l'intermédiaire de l'interface de communication (10), le premier courant de référence (I_{ref1}).

12. Luminaire (14) comprenant,
- un dispositif de commande (13) selon l'une quelconque des revendications 8 à 11, et
- un moyen d'éclairage (8), éventuellement au moins une diode électroluminescente, DEL ; dans lequel
- le dispositif de commande (13) est configuré pour faire fonctionner le moyen d'éclairage (13).

13. Procédé de commande d'une source de courant (7) configurée pour fournir un courant (I_{LM}) à un moyen d'éclairage (8), dans lequel le procédé comprend
- l'obtention d'un premier courant de référence (I_{ref1}) pour le courant (I_{LM}),
- la génération, sur la base du premier courant de référence (I_{ref1}), d'un second courant de référence (I_{ref2}), dans lequel l'amplitude du second courant de référence (I_{ref2}) varie périodiquement, avec une fréquence, autour de l'amplitude du premier courant de référence (I_{ref1}),
- l'exécution d'une commande de rétroaction du courant (I_{LM}) par rapport au second courant de référence (I_{ref2}),
et
- la génération, sur la base de la commande de rétroaction, d'un signal de commande (CS) pour commander la source de courant (7),
**caractérisé en ce que** le procédé comprend
- le calcul d'une erreur entre une mesure du courant (I_{LM}) et le second courant de référence (I_{ref2}),
- l'introduction de l'erreur dans un dispositif de commande (3a), et
- la génération, sur la base d'une sortie (Cₒᵤₜ) du dispositif de commande (3a), du signal de commande (CS) pour commander la source de courant (7).
